# EUROPEAN PATENT SPECIFICATION

(11) **EP 1 988 845 B1**
(45) Date of publication and mention of the grant of the patent: **28.03.2018**
(21) Application number: 07757570.2
(22) Date of filing: 27.02.2007
(51) Int. Cl.: A61C 17/22, A61C 17/02, A46B 11/00

(54) **Tip for Oral Irrigator**
Spitze für Mundspülgerät
Embout pour irrigateur oral

(30) Priority: 27.02.2006 US 777095 P; 27.02.2007 US 679675
(43) Date of publication of application: 12.11.2008
(73) Proprietor: Water Pik, Inc., Fort Collins, CO 80553-0001 (US)
(72) Inventor: BOYD, Brian, Fort Collins, CO 80526 (US); WILLIAMS, Brian R., Fort Collins, CO 80521 (US); TAYLOR, Kurt M., Fort Collins, CO 80526 (US)
(74) Representative: Miller, James Lionel Woolverton
(86) International application number: PCT/US2007/062899
(87) International publication number: WO 2007/101210

(56) References cited:
- WO-A1-2004/021958
- DE-B- 1 053 741
- JP-A- H11 276 508
- US-A- 5 484 281
- US-A- 5 653 591
- US-A1- 2002 152 565
- US-A1- 2003 013 063
- US-A1- 2003 053 847

## Description

### BACKGROUND OF THE INVENTION

### 1. Technical Field

The present invention relates generally to dental hygiene, and more particularly to a tip for an oral irrigator.

### 2. Background

Oral irrigators have become more and more prevalent in daily hygiene routines. Oral irrigators may direct water, medicament, or other fluids against teeth and into interproximal spaces, thus cleaning such areas as well as aiding in removing plaque and strengthening teeth.

### SUMMARY OF THE INVENTION

Most oral irrigator tips merely direct fluid flow to a particular spot. Few, if any, oral irrigator tips also provide any ability to enhance picking and/or removal of items from between teeth with something other than the directed fluid. Accordingly, there is a need in the art for an improved oral irrigator tip. The present invention takes the form of an oral irrigator according to appended claim 1. Further embodiments are defined by the appended dependent claims.

### BRIEF DESCRIPTION OF THE FIGURES

Fig. 1 is a perspective view of an example of an oral irrigator, showing the oral irrigator with an embodiment of an oral irrigator tip.
Fig. 2 is a side view of an embodiment of an oral irrigator tip.
Fig. 3 is a front view of the oral irrigator tip of Fig. 2.
Fig. 4 is a side view of another embodiment of an oral irrigator tip.
Fig. 5 is a partial exploded perspective view of the oral irrigator tip of Fig. 2.
Fig. 6 is a partial cross-section view of the oral irrigator tip of Fig. 2, taken along line 6-6 of Fig. 3.
Fig. 7 is a partial cross-section view similar to Fig. 6, showing another embodiment of the bristle element.
Fig. 8 is a partial exploded perspective view similar to Fig. 5, showing another embodiment of an oral irrigator tip including a nozzle fixedly attached to a shaft portion.

### DETAILED DESCRIPTION OF THE INVENTION

Described herein are embodiments of an oral irrigator tip for an oral irrigator. The oral irrigator tip may take the form of a tip portion joined to a shaft portion including a retainer feature for joining the oral irrigator tip to an oral irrigator. The tip portion may include a nozzle removably or fixedly joined to the shaft portion. The shaft portion may include a fluid inlet fluidly communicating with a fluid reservoir of an oral irrigator and a fluid passage for conveying fluid from a base to an apex of the shaft portion. The shaft portion may further include a fluid outlet fluidly joined to a fluid inlet of the nozzle, which in turn, may be fluidly joined to a nozzle fluid outlet for delivering a fluid stream from the nozzle. Fluid exiting the nozzle may be used to irrigate, or otherwise clean, a user's mouth.

The oral irrigator tip may further include a bristle element positioned proximate the nozzle to aid in the removal of items, such as food particles, from between the interproximal spaces of the teeth. The bristle element may be fixed relative to the shaft portion, or may movable relative to the shaft portion to impart a picking or removing motion to the bristle element.

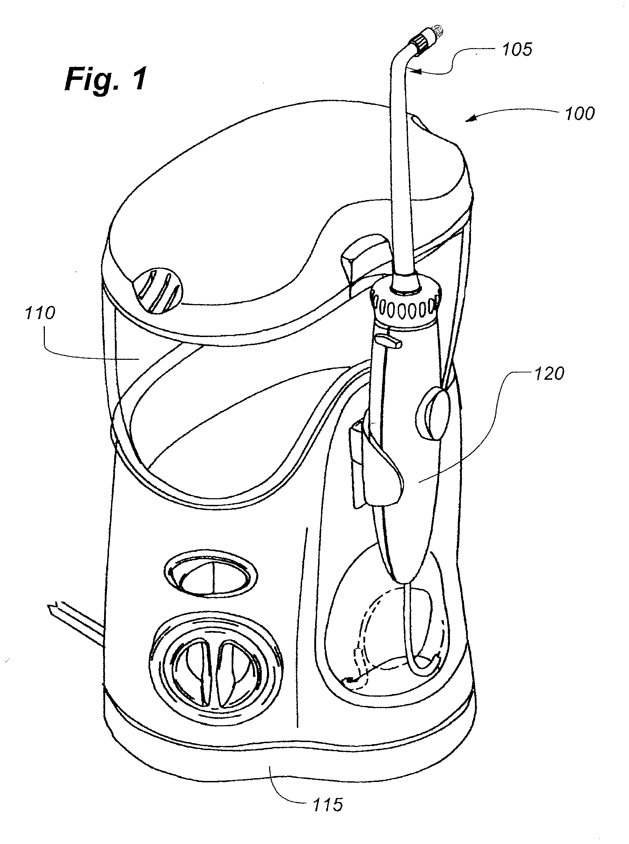

Fig. 1 depicts an example of an oral irrigator 100 joined to an embodiment of an oral irrigator tip 105. The oral irrigator 100 may take the form of an oral irrigator as depicted in Fig. 1, as depicted or described in U.S. Pat. No. 11/361,749, or any other similar form. Generally, the oral irrigator 100 may include a reservoir 110 for holding a fluid, such as water, in fluid communication with a pump contained in a housing 115. The pump conveys fluid from the reservoir 110 to a handle 120 in fluid communication with the pump. An oral irrigator tip 105 may be attached to the handle 120 to deliver a fluid stream. The fluid stream may be used to clean the teeth of a user, or to provide other dental hygiene functions.

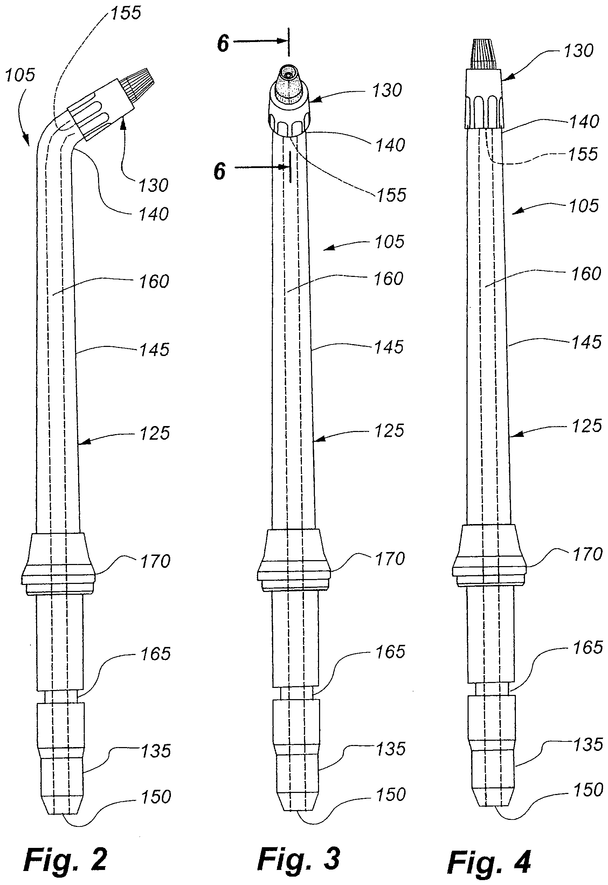

Generally, one embodiment of the oral irrigator tip 105 may take the form of a shaft portion 125 joined to a tip portion 130, or other fluid outlet element or assembly of components, as shown, for example, in Figs. 2-4. The shaft portion 125 may be formed from plastic, metal, ceramics, or other rigid or semi-rigid materials. The shaft portion 125 may have a base 135 at one end, an apex 140 at another end, and a transitional portion 145 extending from the base 135 to the apex 140.

The shaft portion 125 may be straight as shown, for example, in Fig. 4, or an angle may be formed at some point along the shaft portion 125 as shown, for example, in Figs. 2-3. As shown in Fig. 2, the angle formed in the transitional portion 145 (or apex 140) of the shaft portion 125 may be approximately 60 degrees, although the angle may be more or less in alternative embodiments. The angle may be formed by heat softening a straight shaft portion 125 in the area to be angled and then bending the heat-softened portion into the desired angle or shape, by forming the shaft portion 125 in a mold of the desired bent shape, by joining a bent component to a straight component, and so on.

The shaft portion 125 is typically hollow from a fluid inlet 150, which may be defined in or proximate the base 135, to a fluid outlet 155, which may be defined in or proximate the apex 140, to form a fluid passage 160 within the shaft portion 125. The shaft fluid inlet 150 may be fluidly connected to an oral irrigator fluid outlet, such as a handle fluid outlet, and the shaft fluid outlet 155 to a nozzle fluid inlet, or other tip portion fluid inlet, thus permitting fluid to flow along the shaft portion 125 from the oral irrigator 100 to the tip portion 130.

A retaining feature 165 may be formed on the shaft portion 125, for example, as shown in Figs. 2-4. The retaining feature 165 generally permits the oral irrigator tip 105 to be mated to, and retained in, an oral irrigator 100. The retaining feature 165 may be, for example, an annular groove formed about the transitional portion 145 near the base 135 and may be mated to the oral irrigator 100, for example, by a shelf or protuberance within the oral irrigator as described in U.S. Pat Application No. 11/361,749, or in any other suitable manner. Alternatively, the retaining feature 165 may be a projection similarly placed. The projection may seat within a groove or depression formed within the oral irrigator 100 to connect the oral irrigator tip 105 to the oral irrigator 100.

An anti-rotation feature 170 may be formed on the shaft portion 125 to limit rotation of the oral irrigator tip 105 relative to the handle 120 about a longitudinal axis of the shaft portion 125 when the oral irrigator tip 105 is coupled to the oral irrigator 100. The anti-rotation feature 170 may take the form of a flange extending from the shaft portion 125 and configured for receipt within a recess formed in the handle 120 of an oral irrigator 100. The flange may be a polygon or other non-circular shape, and the handle recess a similar shape, to prevent rotation of the flange within the handle recess, and thus prevent rotation of the oral irrigator tip 105 relative to the handle 120 about the longitudinal axis of the oral irrigator tip 105.

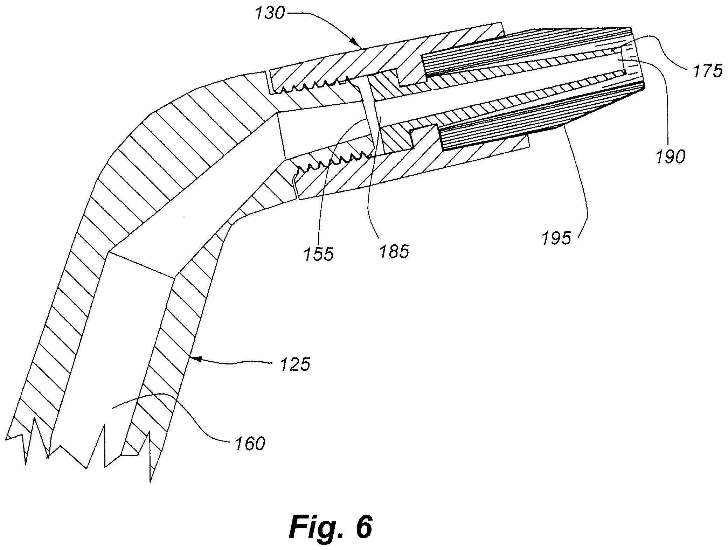

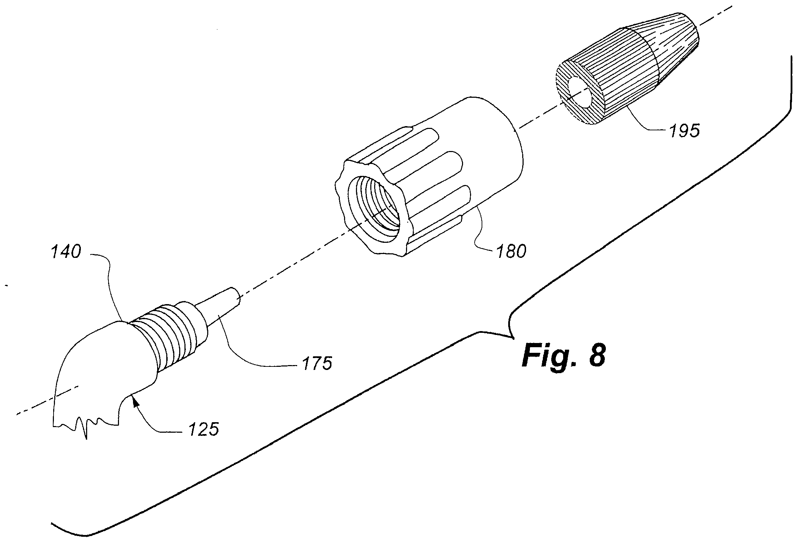

As depicted, for example, in Figs. 6 and 8, the tip portion 130 may include a nozzle 175, or other fluid element outlet, joined to the shaft portion 125 at or proximate the apex 140. In some embodiments as shown, for example, in Fig. 8, the nozzle 175 may be integrally formed with the shaft portion 125 (e.g., the nozzle 175 and shaft portion 125 may be formed as a unitary piece by injection molding), or may be adhered, sonically welded, or otherwise relatively permanently affixed to the apex 140. In other embodiments, the nozzle 175 may be removably affixed, either directly or indirectly, to the shaft portion 125.

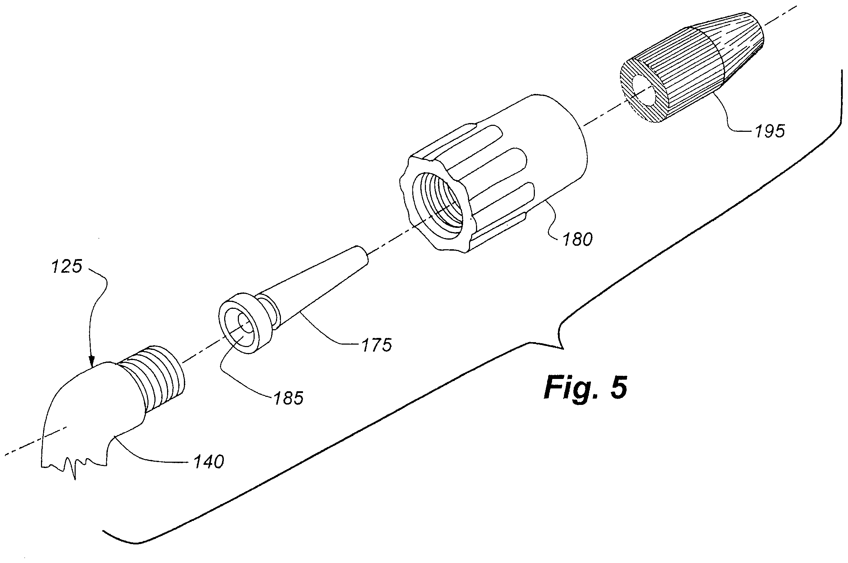

For example, the nozzle 175 may be removably joined directly to the shaft portion 125 by threading, press fitting, clamping, or otherwise removably joining the nozzle 175 to the shaft portion 125. As yet another example and as shown in Figs. 2-6, the nozzle 175 may be removably joined indirectly to the shaft portion 125 by a cylindrical connector 180, such as a threaded nut. Continuing with the example, the nozzle 175, as shown in Figs. 5 and 6, may include an annular groove for mating with an annular projection formed within the connector 180 to removably join the nozzle 175 to the connector 180. In other embodiments, the nozzle 175 may be integrally formed with the connector 180, or may be adhered, sonically welded, or otherwise permanently joined to the connector 180. Still continuing with the example, the connector 180 may include a threaded portion for mating with a threaded section of the shaft portion 125. The connector 180 may be internally threaded and the shaft portion 125 externally threaded as shown in Fig. 5, or vice versa. In some embodiments, the connector 180 may be press fit, clamped, or otherwise removably connected to the shaft portion 125.

Like the shaft portion 125, the nozzle 175 may include a fluid inlet 185 joined to a fluid outlet 190 by a fluid passage. The nozzle 175 may be configured to deliver any desired fluid stream, or streams, from the oral irrigator tip 105, including a single, pulsating or non-pulsating stream or multiple pulsating, non-pulsating, diverging, and/or converging streams. The type of stream delivered from the nozzle 175 may be selected based on the desired oral irrigation. The nozzle fluid inlet 185 may be axially aligned with the hollow of the shaft portion 125, thus permitting fluid flowing through the shaft portion 125 to flow through the nozzle 175.

In certain embodiments, the nozzle 175 may be manufactured from rubber, such as a latex-free natural rubber, and formed into a flexible tube or the like. The nozzle 175, in certain alternative embodiments, may be made from a soft plastic or other suitable, non-rubber material such as a thermoplastic elastomer. In yet other embodiments, the nozzle 175 may be formed of a material similar to the shaft portion 125, such a relatively rigid plastic.

Attached to the connector 180 is a bristle element 195. The bristle element 195 may be made of a plurality of individual bristles glued or otherwise affixed to the interior of the connector 180. The bristles may be arranged in a circular pattern; fluid may flow around the individual bristles or through the center of the bristles, and ultimately through the bristle element 195. Further, the bristles may be affixed to both the connector 180 and the nozzle 175.

The nozzle 175 may be placed within the bristle element 195. Fluid may flow through the nozzle 175 to irrigate a user's mouth. Typically, although not necessarily, the end of the nozzle 175 is coplanar with the end of the bristle element 195. The nozzle 175, however, may extend beyond the bristle element 195, or vice versa. Changing the location of the nozzle 175 relative to the bristle element 195 may be used as one method to control whether fluid exiting the nozzle 175 passes through the bristle element 195. For example, if the nozzle 175 extends beyond the bristle element 195, then fluid will generally not flow through the bristle element 195. As another example, if the bristle element 195 extends beyond the nozzle 175, then a portion of a conical shaped fluid stream exiting the nozzle may intersect with, and thus flow through, at least a portion of the bristle element 195.

The bristle element 195 may have a variety of configurations. For example, and as shown in Fig. 4, the bristle element 195 may be formed into a truncated cone atop a cylinder. Typically, the configuration of the bristle element 195 enhances cleaning of teeth. Particularly, the bristle element 195 aids in picking or removing items from interproximal areas between teeth, including gaps between teeth and within the space between a tooth and the gum, such as the sulcus. The bristle element 195 may also facilitate directing fluid flowing out of the oral irrigator tip 105 and to a particular location.

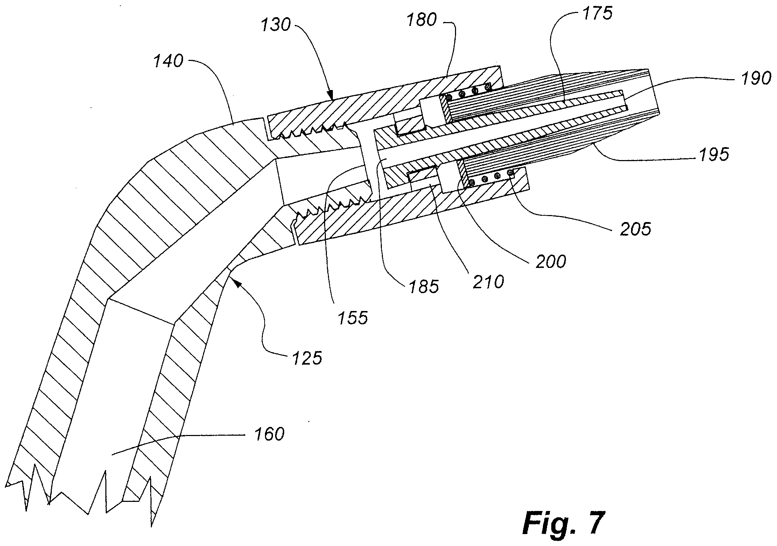

The bristle element 195 may be fixed in place relative to the shaft portion 125 and/or connector 180, or may be movable with respect thereto. For example, as shown in Fig. 7, the bristles of the bristle element 195 may be affixed to a disk or annular ring 200 which may, in turn, be operatively associated with a spring 205, such as a coil spring. The spring 205 and annular ring 200 may be placed within either the connector 180, as shown in Fig. 7, or the shaft portion 125. As fluid flows through the shaft portion 125, the nozzle 175, or connector 180 (e.g., through fluid conduits 210 formed in the connector 180 as shown in Fig. 7), it may impact the annular ring 200, and push against the resistance of the spring 205. This, in turn, may at least somewhat compress the spring 205, causing the attached bristles to move forward and partially out of the connector 180. As fluid continues to flow through the oral irrigator tip 105, turbulence or variations in the fluid flow may affect the manner, point, or pressure at or in which the fluid interacts with the annular ring 200. This, in turn, may cause the annular ring 200 to rock, move inward, outward or otherwise move within or relative to the connector 180 or shaft portion 125 (either laterally or longitudinally). The resulting motion may impart to the bristles of the bristle element 195 a picking or cleaning motion.

## Claims

1. An oral irrigator tip (105), comprising
a nozzle (175), a shaft portion (125) comprising a fluid passage (160) in fluid communication with the nozzle (175), the nozzle (175) including an outlet opening (190) and an inlet opening (185) in fluid communication with the outlet opening (190);
a bristle element (195) proximate the outlet opening (190) of the nozzle (175); and,
a connector (180) that supports the bristle element (195), the bristle element (195) being attached to the connector (180), and the connector (180) being configured to connect with the shaft portion (125) and to join the nozzle (175) to the shaft portion (125), the oral irrigator tip (105) being **characterised in that** the bristle element (195) comprises a plurality of bristles, and said bristle element (195) is in the form of a truncated cone atop a cylinder.

2. The oral irrigator tip (105) of claim 1, wherein
the shaft portion (125) is configured to provide fluid communication between an oral irrigator (100) and the nozzle (175).

3. The oral irrigator tip (105) of claim 2, wherein the nozzle (175) is fixedly joined to the shaft portion (125).

4. The oral irrigator tip (105) of claim 2, wherein the shaft portion (125) is configured to be removably coupled to the oral irrigator (100).

5. The oral irrigator tip (105) of claim 2, wherein the shaft portion (125) comprises a base (135), an apex (140), and a transitional portion (145) linking the base (135) to the apex (140).

6. The oral irrigator tip (105) of claim 5, further comprising a connector removably coupled to the apex (140).

7. The oral irrigator tip (105) of claim 1, wherein the connector (180) is removably coupled to the apex (140), and preferably wherein the connector (180) is configured to be removably coupled to the nozzle (175), and preferably wherein the connector (180) is removably coupled to the nozzle (175).

8. The oral irrigator tip (105) of claim 7, wherein the bristle element (195) at least partially extends through the connector (180), and preferably wherein the bristle element (195) is attached to the connector (180).

9. The oral irrigator tip (105) of claim 1, wherein the nozzle (175) is placed within the bristle element (195).

10. The oral irrigator tip (105) of claim 1, wherein the nozzle (175) comprises rubber, or wherein the nozzle (175) comprises plastic.

11. The oral irrigator tip (105) of claim 1, wherein the bristle element (195) is movable relative to the nozzle (175).

12. The oral irrigator tip (105) of claim 2, wherein the shaft portion (125) comprises a retaining feature (165), and preferably wherein the retaining feature (165) comprises a groove.

13. The oral irrigator tip (105) of claim 2, wherein the shaft portion (125) comprises an anti-rotation feature (170).

14. The oral irrigator tip (105) of claim 1, wherein the bristles of the bristle element (195) are arranged in a circular pattern, the nozzle (175) is placed within the bristle element (195) and fluid can flow through the centre of the bristles, and ultimately through the bristle element (195).

## Patentansprüche

1. Spitze (105) für ein Mundspülgerät, umfassend
eine Düse (175), einen Schaftabschnitt (125), der einen Flüssigkeitsdurchgang (160) in Fluidverbindung mit der Düse (175) umfasst, wobei die Düse (175) eine Auslassöffnung (190) und eine Einlassöffnung (185) in Fluidverbindung mit der Auslassöffnung (190) aufweist;
ein Borstenelement (195) neben der Auslassöffnung (190) der Düse (175); und
ein Verbindungsglied (180), das das Borstenelement (195) unterstützt, wobei das Borstenelement (195) am Verbindungsglied (180) befestigt ist und das Verbindungsglied (180) zur Verbindung mit dem Schaftabschnitt (125) und zur Verbindung der Düse (175) mit dem Schaftabschnitt (125) ausgelegt ist, wobei die Spitze (105) für ein Mundspülgerät **dadurch gekennzeichnet ist, dass** das Borstenelement (195) eine Vielzahl von Borsten umfasst und das Borstenelement (195) in Form eines Kegelstumpfes auf einem Zylinder vorliegt.

2. Spitze (105) für ein Mundspülgerät nach Anspruch 1, wobei der Schaftabschnitt (125) zur Bereitstellung einer Fluidverbindung zwischen einem Mundspülgerät (100) und der Düse (175) ausgelegt ist.

3. Spitze (105) für ein Mundspülgerät nach Anspruch 2, wobei die Düse (175) fest mit dem Schaftabschnitt (125) verbunden ist.

4. Spitze (105) für ein Mundspülgerät nach Anspruch 2, wobei der Schaftabschnitt (125) zur abnehmbaren Verbindung mit dem Mundspülgerät (100) ausgelegt ist.

5. Spitze (105) für ein Mundspülgerät nach Anspruch 2, wobei der Schaftabschnitt (125) eine Basis (135), ein Spitzenstück (140) und einen Übergangsabschnitt (145), der die Basis (135) mit dem Spitzenstück (140) verbindet, umfasst.

6. Spitze (105) für ein Mundspülgerät nach Anspruch 5, ferner umfassend ein Verbindungsglied, das abnehmbar mit dem Spitzenstück (140) verbunden ist.

7. Spitze (105) für ein Mundspülgerät nach Anspruch 1, wobei das Verbindungsglied (180) abnehmbar mit dem Spitzenstück (140) verbunden ist und wobei das Verbindungsglied (180) vorzugsweise zur abnehmbaren Verbindung mit der Düse (175) ausgelegt ist, und wobei das Verbindungsglied (180) vorzugsweise abnehmbar mit der Düse (175) verbunden ist.

8. Spitze (105) für ein Mundspülgerät nach Anspruch 7, wobei sich das Borstenelement (195) zumindest teilweise durch das Verbindungsglied (180) erstreckt und wobei das Borstenelement (195) vorzugsweise am Verbindungsglied (180) befestigt ist.

9. Spitze (105) für ein Mundspülgerät nach Anspruch 1, wobei die Düse (175) im Borstenelement (195) platziert ist.

10. Spitze (105) für ein Mundspülgerät nach Anspruch 1, wobei die Düse (175) Gummi umfasst oder wobei die Düse (175) Kunststoff umfasst.

11. Spitze (105) für ein Mundspülgerät nach Anspruch 1, wobei das Borstenelement (195) bezüglich der Düse (175) beweglich ist.

12. Spitze (105) für ein Mundspülgerät nach Anspruch 2, wobei der Schaftabschnitt (125) ein Haltemittel (165) umfasst und wobei das Haltemittel (165) vorzugsweise eine Rille umfasst.

13. Spitze (105) für ein Mundspülgerät nach Anspruch 2, wobei der Schaftabschnitt (125) eine Drehsicherung (170) umfasst.

14. Spitze (105) für ein Mundspülgerät nach Anspruch 1, wobei die Borsten des Borstenelements (195) in einem kreisförmigen Muster angeordnet sind, wobei die Düse (175) im Borstenelement (195) platziert ist und Flüssigkeit durch die Mitte der Borsten und letztendlich durch das Borstenelement (195) fließen kann.

## Revendications

1. Embout pour irrigateur oral (105) comprenant :
une buse (175),
une partie formant tige (125) comprenant un passage pour fluide (160) en communication fluidique avec la buse (175), la buse (175) comprenant une ouverture de sortie (190) et une ouverture d'entrée (185) en communication fluidique avec l'ouverture de sortie (190) ;
un élément à soies (195) à proximité de l'ouverture de sortie (190) de la buse (175) ; et
un raccord (180) qui supporte l'élément à soies (195), l'élément à soies (195) étant fixé au raccord (180) et le raccord (180) étant configuré pour se raccorder avec la partie formant tige (125) et pour attacher la buse (175) à la partie formant tige (125),
l'embout pour irrigateur oral (105) étant **caractérisé en ce que** l'élément à soies (195) comprend une pluralité de soies, et ledit élément à soies (195) se présente sous la forme d'un cône tronqué surmontant un cylindre.

2. Embout pour irrigateur oral (105) selon la revendication 1, dans lequel
la partie formant tige (125) est configurée pour assurer une communication fluidique entre un irrigateur oral (100) et la buse (175).

3. Embout pour irrigateur oral (105) selon la revendication 2, dans lequel la buse (175) est reliée de manière fixe à la partie formant tige (125) .

4. Embout pour irrigateur oral (105) selon la revendication 2, dans lequel la partie formant tige (125) est configurée pour être accouplée de manière amovible à l'irrigateur oral (100).

5. Embout pour irrigateur oral (105) selon la revendication 2, dans lequel la partie formant tige (125) comprend une base (135), un sommet (140) et une partie de transition (145) reliant la base (135) au sommet (140).

6. Embout pour irrigateur oral (105) selon la revendication 5, comprenant en outre un raccord accouplé de manière amovible au sommet (140).

7. Embout pour irrigateur oral (105) selon la revendication 1, dans lequel le raccord (180) est accouplé de manière amovible au sommet (140), et de préférence dans lequel le raccord (180) est configuré pour être accouplé de manière amovible à la buse (175), et de préférence dans lequel le raccord (180) est accouplé de manière amovible à la buse (175).

8. Embout pour irrigateur oral (105) selon la revendication 7, dans lequel l'élément à soies (195) s'étend au moins partiellement à travers le raccord (180), et de préférence dans lequel l'élément à soies (195) est fixé au raccord (180).

9. Embout pour irrigateur oral (105) selon la revendication 1, dans lequel la buse (175) est placée à l'intérieur de l'élément à soies (195).

10. Embout pour irrigateur oral (105) selon la revendication 1, dans lequel la buse (175) comprend du caoutchouc, ou dans lequel la buse (175) comprend du plastique.

11. Embout pour irrigateur oral (105) selon la revendication 1, dans lequel l'élément à soies (195) peut être déplacé vis-à-vis de la buse (175) .

12. Embout pour irrigateur oral (105) selon la revendication 2, dans lequel la partie formant tige (125) comprend un élément de retenue (165), et de préférence dans lequel l'élément de retenue (165) comprend une rainure.

13. Embout pour irrigateur oral (105) selon la revendication 2, dans lequel la partie formant tige (125) comprend un élément anti-rotation (170) .

14. Embout pour irrigateur oral (105) selon la revendication 1, dans lequel les soies de l'élément à soies (195) sont agencées en un motif circulaire, la buse (175) est placée à l'intérieur de l'élément à soies (195) et du fluide peut s'écouler à travers le centre des soies, et finalement à travers l'élément à soies (195).
